# EUROPÄISCHE PATENTANMELDUNG

(11) **EP 1 561 651 A2**
(43) Veröffentlichungstag der Anmeldung: **10.08.2005**
(21) Anmeldenummer: 05001181.6
(22) Anmeldetag: 21.01.2005
(51) Int. Cl.: B60R 21/34

(54) **Vorderwagen eines Kraftfahrzeugs**

(30) Priorität: 04.02.2004 DE 102004005559
(71) Anmelder: Bayerische Motoren Werke Aktiengesellschaft, 80809 München (DE)
(72) Erfinder: Titze, Holger, 80797 München (DE); Fichtinger, Gerhard, 81541 München (DE)

(57) **Zusammenfassung**

Neuerdings kommt nun bei der Verbesserung der passiven Sicherheit dem Schutz von Fußgängern eine zunehmende Bedeutung zu. Ein Aspekt gilt dabei dem unteren Beinbereich, dem sogenannten "lower leg". Das "lower leg" stellt üblicherweise den Bereich dar, mit dem der Fußgänger als erstes mit dem Fahrzeug in Kontakt kommt. Aufgabe der Erfindung ist es, einzelne Fahrzeugkomponenten so weiterzubilden, dass sich die Sicherheit für Fußgänger im Bereich des "lower leg" verbessert.

Erfindungsgemäß erstreckt sich eine untere Motorraumabdeckung (4) eines Kraftfahrzeugs - wenn sie im Kraftfahrzeug eingebaut ist - in Fahrzeuglängsrichtung nach vorne bis in den Bereich eines Stoßfängers (3). Sie ist mit Rippen (6) besonders versteift, sodass sie sich bei einem frontalen Unfall des Fahrzeugs mit einem Fußgänger nicht nennenswert verformt. Bei dem Unfall kommt so der Fußgänger nicht nur mit dem Stoßfänger (3), sondern auch mit der weiter unten angeordneten, steifen, weit nach vorne ragenden Motorraumabdeckung (4) in Kontakt. Durch den zusätzlichen tieferen Berührpunkt wird der Fußgänger in Richtung Frontklappe (2) gekippt, sodass der kritische Biegewinkel im Knie des Fußgängers klein gehalten werden kann.

## Beschreibung

Die Erfindung betrifft eine untere Motorraumabdeckung und einen Vorderwagen eines Kraftfahrzeugs mit einer solchen unteren Motorraumbdeckung.

Die Sicherheit für Insassen von Kraftfahrzeugen hat sich in den letzten Jahrzehnten stark erhöht aufgrund innovativer Entwicklungen, der Akzeptanz dieser Entwicklungen durch den Kunden sowie aufgrund immer umfangreicherer gesetzlicher Reglementierungen. Neuerdings kommt nun bei der Verbesserung der passiven Sicherheit dem Schutz von Fußgängern eine zunehmende Bedeutung zu. Die europäische Kommission hat unlängst einen Entwurf für ein europäisches Gesetz verabschiedet, das die Überprüfung der Fußgängersicherheit bei Neufahrzeugen vorsieht. Ein Aspekt gilt dabei einem möglichen Aufprall des Kopfes auf den Vorderwagen des Fahrzeugs. In der Patentliteratur finden sich bereits mannigfach Lösungen, wie der Kopf des Fußgängers biomechanisch verträglich verzögert werden kann, wenn er auf eine Frontklappe aufschlägt. Ein weiterer Aspekt gilt dem unteren Beinbereich, dem sogenannten "lower leg". Das "lower leg" stellt üblicherweise den Bereich dar, mit dem der Fußgänger als erstes mit dem Fahrzeug in Kontakt kommt. Dabei kollidiert normalerweise der Stoßfänger des Fahrzeugs mit dem "lower leg", da der Stoßfänger sich am weitesten in Fahrzeuglängsrichtung nach vorne erstreckt.

Aufgabe der Erfindung ist es, einzelne Fahrzeugkomponenten so weiterzubilden, dass sich die Sicherheit für Fußgänger im Bereich des "lower leg" verbessert.

Diese Aufgabe wird mit einer unteren Motorraumabdeckung mit den Merkmalen des Patentanspruchs 1 gelöst. Patentanspruch 5 beschreibt einen Vorderwagen eines Kraftfahrzeugs mit einer solchen unteren Motorraumabdeckung.

Gemäß Patentanspruch 1 erstreckt sich eine untere Motorraumabdeckung eines Kraftfahrzeugs - wenn sie im Kraftfahrzeug eingebaut ist - in Fahrzeuglängsrichtung in Fahrtrichtung gesehen nach vorne zumindest bis in den Bereich eines Stoßfängers. Sie ist besonders versteift, sodass sie sich bei einem frontalen Unfall des Fahrzeugs mit einem Fußgänger nicht nennenswert verformt. Bei dem Unfall kommt so der Fußgänger nicht nur mit dem Stoßfänger, sondern auch mit der weiter unten angeordneten, steifen, weit nach vorne ragenden Motorraumabdeckung in Kontakt. Durch den zusätzlichen tieferen Berührpunkt wird der Fußgänger in Richtung Frontklappe gekippt, sodass der kritische Biegewinkel im Knie des Fußgängers klein gehalten werden kann. Die im derzeitigen Gesetzesentwurf der europäischen Kommission vorgesehenen Grenzwerte bzgl. "lower leg" können so eingehalten werden, ohne dass zusätzliche Elemente am Fahrzeug zur Kraftaufnahme erforderlich sind. Entsprechend wird nur wenig zusätzlicher Bauraum benötigt. Gegenüber anderen Lösungen ist die erfindungsgemäße Variante zudem mit besonders geringen Herstell-, Investitions- und Montagekosten verbunden.

Die untere Abdeckung muss dafür entsprechend steif ausgelegt sein, sodass sie nicht bereits beim Aufprall des "lower leg" des Fußgängers bricht oder sich erheblich verformt. Dazu ist die untere Abdeckung bevorzugt mit Rippen und / oder Waben besonders versteift. Im Gegensatz dazu kann günstigerweise der Stoßfänger und / oder die Stoßfängerverkleidung so ausgelegt sein, dass sie bereits bei geringen einwirkenden Kräften nachgeben. Dadurch behindern der Stoßfänger und / oder die Stoßfängerverkleidung praktisch nicht das durch die untere Motorraumabdeckung initiierte Kippen des Fußgängers auf die Frontklappe. Die Beschleunigungswerte des Fußgängers beim Aufprall reduzieren sich so noch zusätzlich.

Gemäß Patentanspruch 5 befindet sich dazu bei einem vorderen Stoßfänger zwischen einer leicht verformbaren Stoßfängerverkleidung und einem Stoßfängerträger ein verformbares Element. Das verformbare Element kann beispielsweise aus einem Kunststoffschaum bestehen. Bei einem Unfall mit einem Kraftfahrzeug, an dem ein solcher vorderer Stoßfänger verbaut ist, wird zunächst die Stoßfängerverkleidung auf das verformbare Element gedrückt. Anschließend kann die Stoßfängerverkleidung zusammen mit dem verformbaren Element weiter deformiert werden. So behindert der vordere Stoßfänger das von der unteren Motorraumabdeckung initiierte Kippen des Fußgängers auf die Frontklappe nur mehr geringfügig. Dadurch verringert sich der Biegewinkel im Knie des Fußgängers sich gegenüber einem vergleichbaren Aufprall des Fußgängers auf ein Fahrzeug mit einem konventionellen Stoßfänger.

Bevorzugt hat das verformbare Element im Querschnitt eine Keilform, wobei die Keilfläche nach vorne gerichtet ist und die Dicke des Keils nach oben abnimmt. Durch die Keilform der nach vorne ragenden Fläche des verformbaren Elements wird der Fußgänger noch verstärkt in Richtung einer Frontklappe des Fahrzeugs gekippt. Dadurch reduzieren sich die Beschleunigungswerte des Fußgängers noch weiter.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: einen Längsschnitt durch einen Vorderwagen eines PKWs und
- Fig. 2: eine perspektivische Ansicht einer unteren Abdeckung eines Motor-Raums.

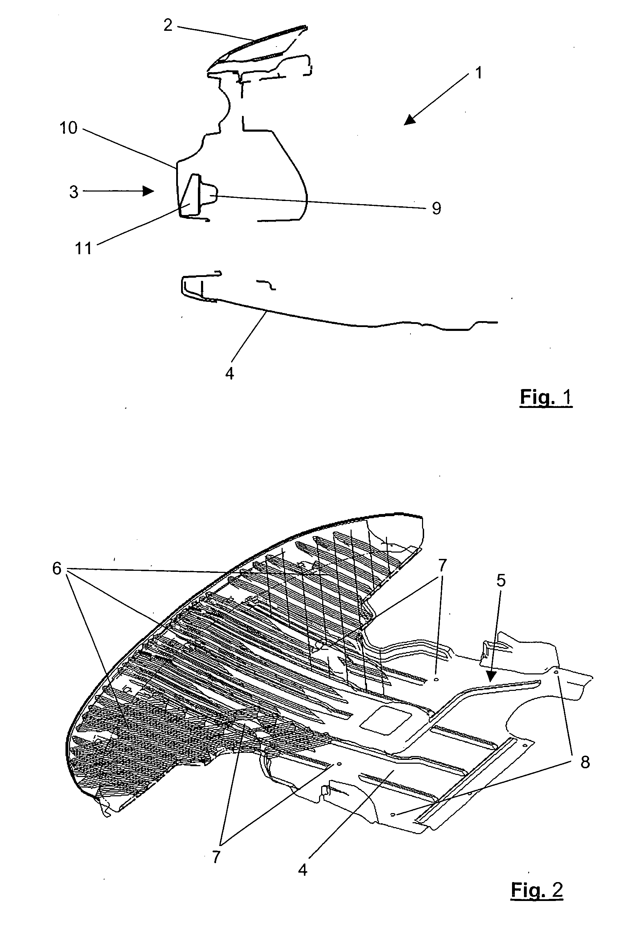

In der Fig. 1 ist ein Schnitt durch einen Vorderwagen 1 dargestellt. Der Vorderwagen 1 wird oben durch eine Frontklappe 2, vorne durch einen Stoßfänger 3 und unten durch eine untere Motorraumabdeckung 4 begrenzt.

Die untere Motorraumabdeckung 4 erstreckt sich im Gegensatz zu konventionellen Motorraumabdeckungen - in Fahrtrichtung gesehen - viel weiter nach vorne bis in den Bereich des Stoßfängers 3. Trotzdem ist sie außerordentlich steif, da sie - wie in Fig. 2 gut erkennbar ist - auf ihrer Oberseite 5 mit vielen Rippen 6 versteift ist. Die Motorraumabdeckung 4 ist über vier Anbindungspunkte 7 von unten an einen Motorträger der Fahrzeugkarosserie und über zwei weitere Anbindungspunkte 8 an einen Vorderachsträger der Fahrzeugkarosserie angeschraubt. Die Rippen 6 sind so ausgelegt, dass die Motorraumabdeckung 4 über die ganze Fahrzeugbreite etwa gleich steif ist und Kräfte, die bei einem Unfall mit einem Fußgänger von vorne in die Motorraumabdeckung 4 eingeleitet werden, zu den Anbindungspunkten 7 und 8 weitergeleitet werden.

Der Stoßfänger 3 wird gebildet von einem Stoßfängerträger 9 und einer Stoßfängerverkleidung 10, zwischen denen über die ganze Breite des Stoßfängers 3 ein verformbares, keilförmiges Element 11 aus einem Kunststoffschaum angeordnet ist. Die keilförmige Fläche des keilförmigen Elements 11 ist nach vorne gerichtet, und die Dicke des Keils nimmt im Querschnitt gesehen nach oben hin ab.

Wenn nun ein Fahrzeug mit einem derartigen Vorderwagen 1 einen Unfall mit einem Fußgänger hat, wird dieser zunächst im Bereich des "lower leg" vom Stoßfänger 3 und praktisch zugleich von der unteren Motorraumabdeckung 4 erfasst. Der Schwerpunkt des Fußgängers ist dabei aufgrund seiner Größe deutlich oberhalb dieser beiden Berührpunkte, sodass er tendenziell in Richtung der Frontklappe 2 kippt. Von großer Bedeutung ist es dabei, dass der Fußgänger möglichst schnell kippt, sodass seine Füße keinen Halt mehr am Boden haben. Denn erst danach kann er ungehindert auf die Frontklappe kippen, zuvor entsteht aufgrund seines hohen Schwerpunkts eine Durchbiegung im Knie. Je höher dabei der Biegewinkel im Knie ist, um so größer ist die Gefahr von erheblichen Verletzungen im Bein. Durch die weit nach vorne ragende unter dem Stoßfänger 3 angeordnete Motorraumabdeckung 4 werden ihm sehr früh quasi die Füße vom Boden weggezogen.

Zudem ist die Stoßfängerverkleidung 10 so konzipiert, dass sie bereits bei geringen Kräften sich verformt, und gegen das keilförmige Element 11 gedrückt wird. Der Fußgänger erhält dabei aufgrund der Keilform des verformbaren Elements 11 zusätzlich einen Drehimpuls, der das Kippen auf die Frontklappe erleichtert.

Beide Maßnahmen - die weit nach vorne ragende, steife Motorraumabdeckung 4 und das keilförmige Element 11 im Stoßfänger 3 - reduzieren jeweils den Biegewinkel im Knie des Fußgängers und reduzieren so die Verletzungsgefahr. Zusammen stellen sie eine optimale Ergänzung dar, sodass im Idealfall weitere Maßnahmen zum Schutz des "lower leg" nicht erforderlich sind.

## Patentansprüche

1. Untere Motorraumabdeckung (4) eines Kraftfahrzeugs, die sich - wenn sie im Kraftfahrzeug eingebaut ist - über zumindest annähernd die ganze Fahrzeugbreite in Fahrzeuglängsrichtung in Fahrtrichtung gesehen nach vorne bis zumindest in den Bereich eines Stoßfängers (3) erstreckt, und die derart versteift ist, dass sie bei einem Unfall des Fahrzeugs mit einem Fußgänger sich nicht nennenswert verformt, sodass nur kleine Biegewinkel im Kniegelenk des Fußgängers entstehen, da dieser durch die Abdeckung (4) in Richtung Frontklappe (2) gekippt wird.

2. Abdeckung (4) nach Anspruch 1, **dadurch gekennzeichnet, dass** die Abdeckung mit Rippen (6) und / oder Waben versteift ist.

3. Abdeckung (4) nach Anspruch 1 oder 2, **dadurch gekennzeichnet, dass** die Abdeckung (4) über Anbindungspunkte (7, 8) an einem Motorträger und / oder einem Achsträger des Kraftfahrzeugs angebracht ist.

4. Abdeckung (4) nach Anspruch 2 und 3, **dadurch gekennzeichnet, dass** die Rippen (6) so ausgelegt sind, dass sie Kräfte, die von vorne und in Fahrzeugquerrichtung gesehen auf die Abdeckung (4) wirken, an Anbindungspunkte (7, 8) weiterleiten.

5. Vorderwagen eines Kraftfahrzeugs, der zum Schutz von aufprallenden Fußgängern eine untere Motorraumabdeckung (4) nach einem der Ansprüche 1 bis 4 und einen vorderen Stoßfänger (3) aufweist, wobei sich zwischen einem Stoßfängerträger (9) und einer leicht verformbaren Stoßfängerverkleidung (10) ein verformbares Element (11) befindet.

6. Vorderwagen nach Anspruch 5, **dadurch gekennzeichnet, dass** das verformbare Element (11) im Querschnitt eine Keilform hat, wobei die Keilfläche in Fahrtrichtung nach vorne gerichtet ist, und die Dicke des Keils nach oben abnimmt, und die Stoßfängerverkleidung (10) sich bereits bei niedrigen auf sie wirkenden Kräften auf das Element (11) gedrückt wird.

7. Vorderwagen nach Anspruch 5 oder 6, **dadurch gekennzeichnet, dass** bei einem Unfall des Kraftfahrzeugs mit einem Fußgänger nur kleine Biegewinkel im Kniegelenk des Fußgängers entstehen, da dieser durch die Abdeckung (4) und durch das verformbare Element (11) in Richtung Frontklappe (2) gekippt wird.
